# EUROPÄISCHE PATENTSCHRIFT

(11) **EP 2 081 722 B1**
(45) Veröffentlichungstag und Bekanntmachung des Hinweises auf die Patenterteilung: **26.01.2011**
(21) Anmeldenummer: 07785566.6
(22) Anmeldetag: 26.06.2007
(51) Int. Cl.: B23K 1/00

(54) **VERFAHREN ZUR HERSTELLUNG EINES WÄRMETAUSCHERS**
METHOD FOR PRODUCING A HEAT EXCHANGER
PROCÉDÉ DE FABRICATION D'UN ÉCHANGEUR DE CHALEUR

(30) Priorität: 24.10.2006 DE 102006050681
(43) Veröffentlichungstag der Anmeldung: 29.07.2009
(73) Patentinhaber: GEA Energietechnik GmbH, 44809 Bochum (DE)
(72) Erfinder: CARL, Martin, 58452 Witten (DE); HERBERMANN, Michael, 45966 Gladbeck (DE); VOLKMER, Eckhard, 40880 Ratingen (DE); WITTE, Raimund, 44319 Dortmund (DE)
(74) Vertreter: Griepenstroh, Jörg
(86) Internationale Anmeldenummer: PCT/DE2007/001133
(87) Internationale Veröffentlichungsnummer: WO 2008/049383

(56) Entgegenhaltungen:
- WO-A-01/54840
- US-A- 5 042 574
- US-A1- 2004 149 811

## Beschreibung

Die Erfindung betrifft ein Verfahren zur Herstellung eines Wärmetauschers mit den Merkmalen des Patentanspruchs 1.

Insbesondere in der Kraftwerktechnik werden zur Rückkühlung von Wasserdampf seit vielen Jahren luftgekühlte Wärmetauscher eingesetzt. Bei diesen Wärmetauschem handelt es sich um Reihen von A-förmig angeordneten Wärmetauscherbündeln, bei denen der Wasserdampf innerhalb von Rohren kondensiert wird. Durch mit den Rohren verbundene Rippen' wird der Wärmeübergang zur Umgebungsluft verbessert. Wesentlich bei derartigen luftgekühlten Wärmetauschern ist die Korrosionsbeständigkeit, um eine Betriebsfähigkeit von möglichst mehreren Jahrzehnten zu gewährleisten. Es wurden daher eine Reihe von Anstrengungen unternommen, die Wärmetauscherrohre eines derartigen Wärmetauschers korrosionsfest zu gestalten. Es ist z.B. durch die US-PS 5,042,574 bekannt, mit Aluminium plattierte Flachrohre unter Verwendung von Aluminium-Siliziumlot mit wellenförmig gefalteten Aluminium-Rippenbahnen in einem Temperierofen zu verbinden. Diese Art der Verbindung hat den Nachteil, dass eine Verlötung nur über den Umweg von mit Aluminium plattierten Flachrohren bzw. von mit Hilfe von plattierten Aluminiumrippen hergestellt werden kann. Neben dem vergleichsweise hohen Aufwand durch Bereitstellung diverser Materialien besteht außerdem der Nachteil, dass die durch mindestens eine Längsschweißnaht umfangsseitig geschlossenen Flachrohre in der Schweißzone nicht mit Aluminium plattiert sein dürfen, da anderenfalls keine einwandfreie Schweißung gewährleistet werden kann. Probelmatisch beim Hartlöten von Flachrohren aus Stahl mit gefalteten Aluminium-Rippenbändem ist, dass die Verlötung bei vergleichsweise hohen Temperaturen in einer Größenordnung von etwa 600 °C, also nahe der Erweichungstemperatur von Aluminium, stattfinden muss. Das erforderliche Lot besteht in der Regel aus einem etwas unter dem Erweichungspunkt von Aluminium schmelzenden Aluminium-Silizium-Eutektikum. Schwierig ist die Auswahl des Flussmittels, das vor dem Schmelzen des Lots die Oxidschichten der Verbindungsflächen entfernen muss, allerdings ebenfalls nahe der Erweichungstemperatur verflüssigt wird. Die korrekte Temperaturführung beim Löten ist daher oftmals nur empirisch zu ermitteln.

Wegen der unterschiedlichen Temperaturausdehnungskoeffizienten von Aluminium und Stahl können sich auf Grund der hohen Löttemperaturen und auf Grund der anschließenden Abkühlung auf Umgebungstemperatur starke Materialspannungen ergeben, so dass sich die miteinander verbundenen Teile verziehen können, wobei sogar die Lötverbindung aufbrechen kann, wenn die Aluminiumplattierung nicht einwandfrei aufgebracht wurde oder weil sich zwischen dem Stahlrohr und der Aluminiumplattierung eine Eisen-Aluminium-Zwischenschicht gebildet hat, bedingt durch das Aufschmelzen der Aluminiumschicht beim Hartlöten.

Es wurde daher in der EP 1 250 208 B1 vorgeschlagen, die Löttemperatur durch Verwendung von Zink-Aluminium-Legierungen und durch Verwendung von besonderen Flussmitteln in Form von Caesium-Aluminium-Tetrafluorid von bislang ca. 600 °C auf einen Bereich zwischen 370 °C und 470 °C zu reduzieren. Auf Grund der geringeren Temperaturen sind die Materialspannungen auch geringer, allerdings verlangt die Handhabung des Flussmittels auf Grund des Schwermetallanteils besondere Schutzvorkehrungen, um Umweltverschmutzungen zu vermeiden. Bei diesem Verfahren zur Verbindung von Stahlrohren mit Aluminiumrippen wird zunächst auf die Oberfläche der Stahlrohre oder der Aluminiumrippen eine Schicht aus einer Zink-Aluminium-Legierung mit einem Aluminiumbestandteil von 0,5 % bis 20 % aufgebracht. Anschließend wird vor dem oder beim mechanischen Kontakt der Aluminiumrippen mit den Stahlrohren zwischen die Stahlrohre und die Aluminiumrippen bei Raumtemperatur das Flussmittel in Form von Caesium-Aluminium-Tetrafluorid eingebracht, worauf die mit den Aluminiumrippen versehenen Stahlrohre in dem besagten Temperaturbereich von 370°C bis 470 °C erwärmt und letztendlich zur Auskühlung der Raumtemperatur ausgesetzt werden. Liegt die Liquidustemperatur des Lotes unter 450°C spricht man von Weichlöten. Trotz der Möglichkeit, die Lötzeiten um 30 % bis 40 % zu reduzieren, ist die Handhabung des schwermetallhaltigen Flussmittels nicht unproblematisch.

Hiervon ausgehend, liegt der Erfindung die Aufgabe zu Grunde, ein Verfahren zur Herstellung eines Wärmetauschers aufzuzeigen, bei welchem Rippen aus Aluminium oder einer Aluminiumlegierung auf einem Wärmetauscherrohr aus Stahlblech mit außenseitiger, lötfähiger Korrosionsschutzschicht befestigt werden, bei welchem auf den Einsatz von schwermetallhaltigen Flussmitteln verzichtet werden kann, bei welchem aber gleichzeitig gewährleistet ist, dass sich keine störende Eisen-Aluminium-Zwischenmetall-Verbindung oder Zwischenphasen dieser Verbindung zwischen der Korrosionsschutzschicht und dem Stahlrohr ausbilden, um auch bei höheren Löttemperaturen einen festen Verbund zwischen den Rippen und dem Wärmetauscherrohr zu gewährleisten.

Diese Aufgabe wird bei dem Verfahren mit den Merkmalen des Patentanspruchs 1 gelöst.

Vorteilhafte Weiterbildungen des Erfindungsgedankens sind Gegenstand der Unteransprüche.

Bei dem erfindungsgemäßen Verfahren ist vorgesehen, dass das verwendete Stahlblech zur Herstellung der Wärmetauscherrohre schmelztauchveredelt wird. Der Prozess des Schmelztauchveredelns führt dazu, dass sich auf den veredelten Produkten eine Korrosionsschutzschicht ablagert, um das Substrat vor korrosiven Angriffen zu schützen.

Typischerweise wird das beim Schmelztauchveredeln eingesetzte Flachzeug gereinigt, in einem Durchlaufofen rekristallisiert oder aufgeheizt und auf die Temperatur der Metallschmelze abgekühlt, bevor die eigentliche Schmelztauchveredelung in einem schmelzflüssigen Metallbad erfolgt. Bei dem Baddurchlauf werden beide Seiten des Substrats mit der Korrosionsschutzschicht beschichtet.

Der Korrosionsschutz wird bei Wärmetauscherrohren allerdings nur an der Außenseite benötigt. Zwar ist es bekannt, das gesamte Wärmetauscherrohr einschließlich der Rippen unter Verschluss der Rohrenden in eine Metallschmelze einzutauchen, um das gesamte Wärmetauscherrohr einschließlich der Rippen mit einer Korrosionsschutzschicht zu versehen. Da aber die Rippenoberfläche weitaus größer ist als die Oberfläche des Wärmetauscherrohrs, werden sehr große Mengen der Metallschmelze benötigt, was die Kosten in Anbetracht der Dimensionierung von Wärmetauschem zur Kondensation von Wasserdampf bei Kraftwerken in die Höhe treibt. Typischerweise liegen die Längen der Wärmetauscherrohre zwischen 6 und 12 Metern, was zudem entsprechend große Schmelztauchvorrichtungen erforderlich macht. Zudem würden durch die hohen Temperaturen bei einem nachträglichen Schmelztauchen Spannungen im Bauteil erzeugt werden, so dass es sich verzieht.

Bei dem erfindungsgemäßen Verfahren ist dahingegen vorgesehen, dass die Korrosionsschutzschicht im Schmelztauchverfahren vorher aufgebracht und von einer Seite des Stahlblechs insbesondere mechanisch entfernt wird. Die auf diese Weise von der Korrosionsschutzschicht befreite Seite bildet später die Innenseite des Wärmetauscherrohrs, das aus diesem Stahlblech hergestellt ist. Die Korrosionsschutzschicht befindet sich daher nur auf der Außenseite des Wärmetauscherrohrs. Dieses Herstellungsverfahren eines außenseitig beschichteten Wärmetauscherrohrs ist selbst unter Berücksichtigung der Tatsache, dass maschinelle Einrichtungen zur Entfernung der Korrosionsschutzschicht vorgesehen sein müssen, im Ergebnis kostengünstig und damit ausgesprochen wirtschaftlich.

Das erfindungsgemäße Verfahren eignet sich insbesondere zur Herstellung von Wärmetauschern zur Kondensation von Wasserdampf in Kraftwerken, weil die Wasserchemie für das Speisewasser in der Regel vorschreibt, dass auf denjenigen Flächen, die mit dem Wasserdampf in Berührung kommen, keine Nicht-Eisen-Metalle, wie z.B. Aluminium oder Kupfer, anwesend sein dürfen. Zudem bildet sich bei dem Kondensationsprozess eine Magnetit-Schicht, die das Wärmetauscherrohr vor Innenkorrosion schützt, so dass innenseitig kein zusätzlicher Korrosionsschutz erforderlich ist.

Ein wesentlicher Vorteil der Erfindung ist, dass außenseitig Korrosionsschutzschichten zum Einsatz kommen sollen, die in jedem Fall Zink und zwischen 0,5 % rund 60 %, vorzugsweise zwischen 4 % und 55 %, Aluminium enthalten. Die Gegenwart von Zink verhindert oder reduziert die störende Ausbildung von intermetallischen Eisen-Aluminium-Zwischenschichten oder Zwischenphasen der Eisen-Aluminium-Verbindung, die beim späteren Hartlöten zu Abplatzungen der bislang aluminierten Stahlrohre führen konnten. Da auf die Bildung der störenden intermetallischen Eisen-Aluminium-Zwischenschichten nicht mehr in der Weise Rücksicht genommen werden muss wie bisher, wird auch das Herstellungsverfahren deutlich vereinfacht, da die Parameterbereiche bzgl. der Temperatur und des Zeitraums bei der Herstellung der Hartlotverbindung größer gewählt werden können als bei bisherigen Hartlotverbindungen im Zusammenhang mit aluminiumplattierten Stahlrohren.

Ein weiterer Vorteil ist, dass auf caesiumhaltige Flussmittel verzichtet werden kann. Stattdessen kann ein Flussmittel auf Basis von Kalium-Aluminium-Tetrafluorid verwendet werden, zusammen mit einem Aluminium und Silizium enthaltenden Lötmaterial.

In einer ersten Variante des erfindungsgemäßen Verfahrens ist vorgesehen, dass die Rippen mit dem Lötmaterial zumindest bereichsweise plattiert werden. Insbesondere bei Rippen, die Bestandteil eines gewellten Rippenbandes sind, werden beide Seiten der Rippen lotmittelplattiert ausgeführt, um derartige Rippenbänder auf ihren jeweils der Oberfläche des Wärmetauscherrohrs zugewandten Seiten mit diesen zu verbinden. Die Verlötung mit den Rippen erfolgt dabei in den bogenförmigen Bereichen des gewellten Rippenbandes. Das plattierte Lötmaterial wird beim Lötvorgang aufgeschmolzen und fließt in die jeweiligen Lötspalte zwischen den zu verbindenden Bauteilen.

In einer alternativen Ausführungsform ist vorgesehen, dass die Rippen unplattiert sind, also nicht mit einer Lotmittelbeschichtung versehen sind, wobei Lötmaterial separat in den Lötspalt zwischen den Rippen und dem Wärmetauscherrohr eingebracht wird. Diese Vorgehensweise hat den Vorteil, dass bezüglich der Rippen günstigere Ausgangsmaterialien eingesetzt werden können. Auch unter separater Einbringung eines Lötmaterials in den Lötspalt ist eine zuverlässige Verlötung möglich.

In der dritten Verfahrensvariante ist es denkbar, auf die Zuführung von Lötmaterial und auf die Lotplattierung der Rippen zu verzichten,wobei allerdings die Korrosionsschutzschicht aus einer Zink und zwischen 0,5 % und 60 % Aluminium sowie Silizium enthaltenden Legierung ausgebildet wird und wobei das Lötmaterial von der Korrosionsschutzschicht selbst gebildet wird. Auch bei dieser Vorgehensweise ist das Stahlblech nicht mit einer Aluminiumschicht plattiert, sondern ist mit einer im Schmelztauchverfahren aufgebrachten Korrosionsschutzschicht versehen, die zugleich das Lötmaterial bildet. Selbstverständlich ist es möglich, dass auch bei dieser Variante Lötmaterial in den Verbindungsbereich separat zugegeben wird. Selbstverständlich ist es auch nicht ausgeschlossen, dass auch die Rippen lotplattiert sind. Alle drei Varianten können letztlich miteinander kombiniert werden, wobei diejenige Variante, bei der die Korrosionsschutzschicht auf dem Wärmetauscherrohr zugleich das notwendige Lötmaterial für den Lötvorgang bildet, die aus verfahrenstechnischen und wirtschaftlichen Gründen attraktivste Lösung ist.

Unabhängig davon, welche Variante zur Anwendung kommt, wird es als vorteilhaft angesehen, wenn die Korrosionsschutzschicht durch Schmelztauchveredelung aus einem Bad mit 55 % Aluminium, 43,4 % Zink und 1,6 % Silizium hergestellt ist. Bei dem erfindungsgemäßen Verfahren wird eine Obergrenze von 60 % Aluminium in der Korrosionsschutzschicht als zweckmäßig angesehen. Grundsätzlich ist es aber auch denkbar, Korrosionsschutzschichten mit deutlich geringeren Aluminiumanteilen bei dem Verfahren zu verwenden. Insbesondere kann der Aluminiumanteil kleiner als 50 % sein. In einer weiteren Ausführungsform kann die Korrosionsschutzschicht durch eine Schmelztauchveredelung aus einem Zinkbad mit 5 % Aluminium, Silizium und Spuren seltener Erden hergestellt sein.

Eine entscheidende Rolle beim Löten von Aluminium spielt auch das verwendete Flussmittel. Zum Löten muss die Oberfläche der Fügezone durch Entfernen der stets vorhandenen Oxidschichten metallisch blank gereinigt werden und auch währen des Lötens durch den Einsatz von Flussmitteln vor erneuter Oxidbildung geschützt werden. Es hat sich gezeigt, dass sich Flussmittel aus Kalium- und Aluminiumfluoriden (KAlF₄) besonders bewähren. Insbesondere sollte das Verfahren unter kontrollierter Atmosphäre (CAB), insbesondere in einer Stickstoffatmosphäre, durchgeführt werden.

Da bei dem erfindungsgemäßen Verfahren eine der Korrosionsschutzschichten mechanisch entfernt werden soll, kann es zweckmäßig sein, die Korrosionsschutzschichten in unterschiedlicher Dicke auf das Stahlblech aufzubringen, wobei die dünnere der Korrosionsschutzschichten entfernt wird. Auf diese Weise ist der Verlust des gegenüber dem Stahl edleren Beschichtungswerkstoffs geringer und zudem wird der Aufwand zum Abtragen der Korrosionsschutzschicht reduziert.

Das Abtragen der Korrosionsschutzschicht erfolgt vorzugsweise mechanisch, insbesondere durch spanabhebende Bearbeitung. Dies kann mittels rotierender Bürsten erfolgen, da durch die Bürstengeometrie zugleich eine Feinbearbeitung der Oberfläche möglich ist. Grundsätzlich haben beim Schmelztauchverfahren aufgebrachte Korrosionsschutzschichten eine geringere Dicke, so dass sich rotierende Bürstenwerkzeuge bevorzugt dazu eignen, gerade diese geringen Dicken in wirtschaftlicher Weise abzutragen. Selbstverständlich ist es bei größeren Schichtdicken auch möglich, der Bürstenbearbeitung ein Hobel- oder Schabewerkzeug vorzuschalten, um eine Grobbearbeitung des Bandmaterials vorzunehmen. Versuche haben gezeigt, dass vorzugsweise diamantenbestückte Bürstenköpfe zu guten Verfahrensergebnissen führen. Derartige Bürstenköpfe lassen sich so konfigurieren, dass sie eine hohe Standzeit besitzen und gleichzeitig einen hohen Abtragwirkungsgrad aufweisen.

Selbstverständlich ist es im Rahmen der Erfindung nicht ausgeschlossen, der mechanischen Abtragung mittels rotierender Bürsten weitere Feinbearbeitungsschritte folgen zu lassen, falls dies erforderlich werden sollte. Vorstellbar ist, dass die Oberfläche im Anschluss an die Bürstenbearbeitung einer Schleifbearbeitung unterzogen wird, wobei sich bereits ohne Feinstbearbeitung per Schleifkopf allein durch eine Bürstenbearbeitung Oberflächen von 240-1.000 Mikronen Korngröße erzielen lassen.

Die Erfindung wird nachfolgend anhand von in den Zeichnungen veranschaulichten Ausführungsbeispielen näher erläutert. Es zeigen:
- Figur 1: einen Längsschnitt durch die Wand eines Rohrs eines Wärmeübertragers mit umfangsseitigen Rippen;
- Figur 2: die Darstellung der Figur 1 gemäß einer weiteren Ausführungsform und
- Figur 3: die Darstellung der Figur 1 in einer dritten Ausführungsform.

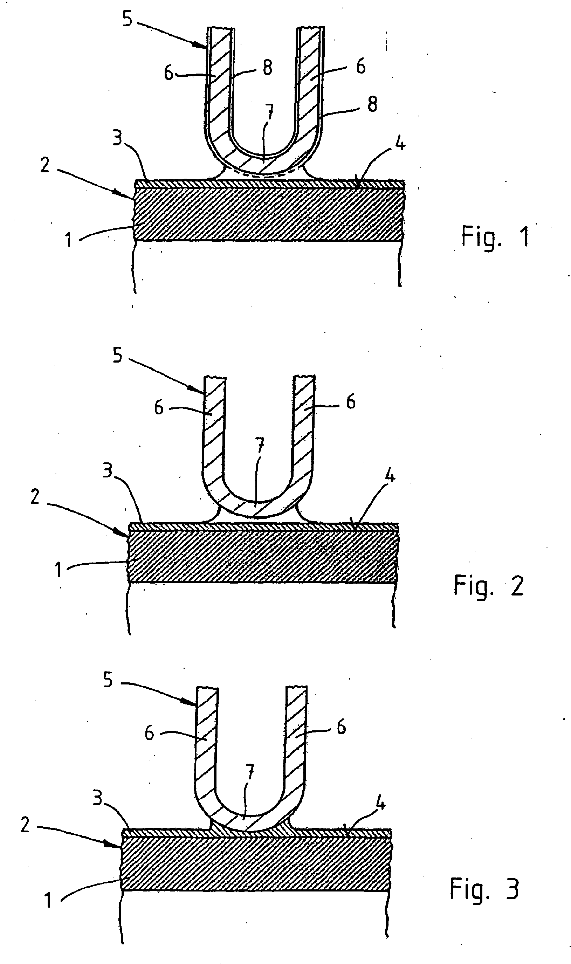

In den Figuren 1 bis 3 ist mit 1 die Wand eines aus Kohlenstoffstahl bestehenden Wärmetauscherrohrs 2 für einen nicht näher dargestellten Wärmetauscher in Form einer luftgekühlten Kondensationsanlage für Wasserdampfturbinen bezeichnet. Das Wärmetauscherrohr 2 kann eine Länge zwischen 6 und 12 Metern aufweisen. Das Wärmetauscherrohr 2 ist gemäß der Ausführungsform der Figur 1 mit einer Korrosionsschutzschicht 3 versehen, die Zink (Zn) und Aluminium (Al) enthält. Die Korrosionsschutzschicht 3 ist durch ein Tauchschmelzverfahren auf die äußere Oberfläche 4 der Wand 1 aufgebracht.

Figur 1 zeigt ferner, dass an der dargestellten Wand 1 des Wärmetauscherrohrs 2 ein gewelltes Rippenband 5 lagefixiert ist. Das Rippenband 5 setzt sich aus mehreren parallel zueinander ausgerichteten Rippen 6 zusammen, die durch bogenförmige Abschnitte 7 einstückig miteinander verbunden sind. Das Rippenband 5 besteht aus Aluminium. Es ist beidseitig mit einem Aluminium und Silizium enthaltenden Lotmaterial 8 plattiert, das während des Lötvorgangs aufschmilzt. Das Lötmaterial 8 enthält zwischen 7,5 % und 12 % Silizium. Dem Lötvorgang in einer kontrollierten Ofenatmosphäre wird KAlF₄ (Kalium-Aluminium-Tetrafluorid) als Flussmittel zugegeben. Während des Lötvorgangs verdrängt das Lötmaterial 8 das nicht näher dargestellte Flussmittel und führt zu einer Verbindung zwischen der Korrosionsschutzschicht 3 und dem bogenförmigen Abschnitt 7 des Rippenbandes 5.

Während des Lötvorgangs erfolgt ein Diffusionsaustausch zwischen den Atomen innerhalb einer sehr dünnen Zone in der Grenzfläche der miteinander zu verbindenden Bauteile. Da die Korrosionsschutzschicht 3 bevorzugt 55 % Aluminium, 43,4 % Zink und 1,6 % Silicium enthält, führt die Gegenwart von Zink zu einem festen Verbund zwischen dem Wärmetauscherrohr 2 aus Stahl und der Korrosionsschutzschicht 3, zumindest aber ohne ausgeprägte Ausbildung einer Eisen-Aluminium-Zwischenschicht, die zu einer Beeinträchtigung der Festigkeit führen würde.

Die Ausführungsform der Figur 2 unterscheidet sich von derjenigen der Figur 1 dadurch, dass das Lötmaterial 8 nicht auf die Rippen 6 plattiert ist, sondern separat in den Lötspalt und selbstverständlich unter Verwendung eines Flussmittels aus Kalium- und Aluminiumfluorid in den Lötspalt eingebracht wird.

Bei der dritten Ausführungsform, wie sie in Figur 3 dargestellt ist, wurde auf Lötmittelzusätze in Form von plattierten Rippen, wie sie in Figur 1 dargestellt sind, verzichtet. Auch wurde kein separates Lötmaterial zugegeben, wie es in Figur 2 dargestellt ist. Vielmehr besteht die Korrosionsschutzschicht 3 aus einer aus 55 % Aluminium, 43,4 % Zink und 1,6 % Silizium hergestellten Legierung, die durch Schmelztauchveredeln auf das Wärmetauscherrohr 2 aufgebracht worden ist und die während des Lötvorgangs unter Verwendung von KAlF₄ als Flussmittel aufgeschmolzen wird, so dass die Korrosionsschutzschicht 3 in unmittelbaren Kontakt zwischen den Rippen 6 einerseits und dem Wärmetauscherrohr 2 andererseits steht. Durch den Zink- und Aluminiumanteil in der Korrosionsschutzschicht 3 kann sowohl ein Verbund zwischen den Rippen 6 aus Aluminium und dem Wärmetauscherrohr 2 aus einem Stahlwerkstoff hergestellt werden.

### Bezugszeichen:

- 1 -: Wand
- 2 -: Wärmetauscherrohr
- 3 -: Korrosionsschutzschicht
- 4 -: Oberfläche v. 1
- 5 -: Rippenband
- 6 -: Rippe
- 7 -: bogenförmiger Abschnitt v. 9
- 8-: Lötmaterial

## Patentansprüche

1. Verfahren zur Herstellung eines Wärmetauschers mit folgenden Schritten:
a) Schmelztauchveredeln eines Stahlblechs zur Ausbildung einer Korrosionsschutzschicht (3), wobei die Korrosionsschutzschicht (3) Zink und zwischen 0,5 % und 60 % Aluminium enthält;
b) Entfernung der Korrosionsschutzschicht (3) von einer Seite des Stahlblechs;
c) Herstellung eines Wärmetauscherrohrs (2) aus diesem Stahlblech, wobei die Korrosionsschutzschicht (3) außenseitig angeordnet ist;
d) Bereitstellen von Rippen (6) aus Aluminium oder einer Aluminiumlegierung;
e) Bereitstellen eines Flussmittels;
f) Bereitstellen eines Aluminium und Silizium enthaltenden Lötmaterials (8) im Verbindungsbereich zwischen den Rippen (6) und der Außenseite des Wärmetauscherrohrs (2);
g) Verbindung des Wärmetauscherrohrs (2) mit den Rippen (6) in einem Hartlötvorgang.

2. Verfahren nach Anspruch 1, **dadurch gekennzeichnet, dass** Rippen (6) mit dem Lötmaterial (8) zumindest bereichsweise plattiert werden.

3. Verfahren nach Anspruch 1, **dadurch gekennzeichnet, dass** unplattierte Rippen (6) mit dem Wärmetauscherrohr (2) unter Einbringung des Lötmaterials (8) in den Lötspalt zwischen Rippen (6) und Wärmetauscherrohr (2) verlötet werden.

4. Verfahren nach Anspruch 1, **dadurch gekennzeichnet, dass** das Lötmaterial von der Korrosionsschicht gebildet ist, welche neben Zink und Aluminium Silizium enthält.

5. Verfahren nach einem der Ansprüche 1 bis 4, **dadurch gekennzeichnet, dass** die Korrosionsschutzschicht (3) durch Schmelztauchveredelung aus einem Bad mit 55% Aluminium, 43,4% Zink und 1,6% Silizium hergestellt ist.

6. Verfahren nach Anspruch 1, **dadurch gekennzeichnet, dass** die Korrosionsschutzschicht (3) durch Schmelztauchveredelung aus einem Zinkbad mit 5% Aluminium, Silizium und Spuren seltender Erden hergestellt ist.

7. Verfahren nach einem der Ansprüche 1 bis 6, **dadurch gekennzeichnet, dass** das Flussmittel eine Kalium-Aluminium-Tetrafluorid-Verbindung ist.

8. Verfahren nach einem der Ansprüche 1 bis 7, **dadurch gekennzeichnet, dass** die Korrosionsschutzschichten (3) in unterschiedlicher Dicke auf das Stahlblech aufgebracht werden, wobei die dünnere der Korrosionschutzschichten abgetragen wird.

9. Verfahren nach einem der Ansprüche 1 bis 7, **dadurch gekennzeichnet, dass** die Abtragung der Korrosionsschutzschicht (3) mechanisch erfolgt.

## Claims

1. Method for producing a heat exchanger with the following steps:
a) hot dip refining a steel sheet to form a corrosion-protection layer (3), wherein the corrosion-protection layer (3) contains zinc and between 0.5% and 60% aluminium;
b) removal of the corrosion-protection layer (3) from one side of the steel sheet;
c) production of a heat exchanger tube (2) from this steel sheet, wherein the corrosion-protection layer (3) is arranged on the outside;
d) provision of ribs (6) of aluminium or an aluminium alloy;
e) provision of a flux;
f) provision of a filler material (8) containing aluminium and silicon in the connecting region between the ribs (6) and the outside of the heat exchanger tube (2);
g) connection of the heat exchanger tube (2) to the ribs (6) in a brazing operation.

2. Method according to Claim 1, **characterised by** the fact that ribs (6) are clad with the filler material (8) at least in some areas.

3. Method according to Claim 1, **characterised by** the fact that unclad ribs (6) are brazed to the heat exchanger tube (2) by introducing the filler material (8) into the joint clearance between ribs (6) and heat exchanger tube (2).

4. Method according to Claim 1, **characterised by** the fact that the filler material is formed by the corrosion layer which contains silicon as well as zinc and aluminium.

5. Method according to one of Claims 1 to 4, **characterised by** the fact that the corrosion-protection layer (3) is produced by hot dip refining from a bath with 55% aluminium, 43.4% zinc and 1.6 % silicon.

6. Method according to Claim 1, **characterised by** the fact that the corrosion-protection layer (3) is produced by hot dip refining from a zinc bath with 5% aluminium, silicon and traces of rare earths.

7. Method according to one of Claims 1 to 6, **characterised by** the fact that the flux is a potassium-aluminium-tetrafluoride compound.

8. Method according to one of Claims 1 to 7, **characterised by** the fact that the corrosion-protection layers (3) are applied to the sheet steel in different thicknesses, with the thinner of the corrosion-protection layers being removed.

9. Method according to one of Claims 1 to 7 **characterised by** the fact that the removal of the corrosion-protection layer (3) is effected mechanically.

## Revendications

1. Procédé pour la fabrication d'un échangeur de chaleur, comprenant les étapes suivantes :
a) on traite une tôle d'acier par immersion dans un bain de fusion pour réaliser une couche anticorrosion (3), ladite couche anticorrosion (3) contenant du zinc et entre 0,5 % et 60 % d'aluminium ;
b) on enlève la couche anticorrosion (3) depuis un côté de la tôle d'acier ;
c) on réalise un tube d'échange de chaleur (2) à partir de cette tôle d'acier, de sorte que la couche anticorrosion (3) est disposée du côté extérieur ;
d) on prépare des nervures (6) en aluminium ou un alliage d'aluminium ;
e) on prépare un flux ;
f) on prépare un matériau de brasage (8) contenant de l'aluminium et du silicium dans la zone de jonction entre les nervures (6) et le côté extérieur du tube d'échange de chaleur (2) ;
g) on réunit le tube d'échange de chaleur (2) avec les nervures (6) dans une opération de brasage dur.

2. Procédé selon la revendication 1, **caractérisé en ce que** les nervures (6) sont au moins localement plaquées avec le matériau de brasage (8).

3. Procédé selon la revendication 1, **caractérisé en ce que** des nervures non plaquées (16) sont brasées avec le tube d'échange de chaleur (2) en introduisant le matériau de brasage (8) dans l'intervalle de brasage entre les nervures (6) et le tube d'échange de chaleur (2).

4. Procédé selon la revendication 1, **caractérisé en ce que** le matériau de brasage est formé par la couche anticorrosion, laquelle contient du silicium en plus du zinc et de l'aluminium.

5. Procédé selon l'une des revendications 1 à 4, **caractérisé en ce que** la couche anticorrosion (3) est produite à par traitement par immersion dans un bain de fusion, dans un bain avec 55 % d'aluminium, 43,4 % de zinc et 1,6 % de silicium.

6. Procédé selon la revendication 1, **caractérisé en ce que** la couche anticorrosion (3) est produite par traitement par immersion dans un bain de fusion, dans un bain de zinc avec 5 % d'aluminium, du silicium et des traces de terres rares.

7. Procédé selon l'une des revendications 1 à 6, **caractérisé en ce que** le flux est un composite potassium-aluminium-tétrafluorure.

8. Procédé selon l'une des revendications 1 à 7, **caractérisée en ce que** les couches anticorrosion (3) sont appliquées sur les épaisseurs différentes sur la tôle d'acier, et dans lequel on enlève la plus mince des couches anticorrosion.

9. Procédé selon l'une des revendications 1 à 7, **caractérisé en ce que** l'enlèvement de la couche anticorrosion (3) a lieu par voie mécanique.
